# EUROPÄISCHE PATENTSCHRIFT

(11) **EP 2 743 649 B1**
(45) Veröffentlichungstag und Bekanntmachung des Hinweises auf die Patenterteilung: **03.02.2016**
(21) Anmeldenummer: 13184899.6
(22) Anmeldetag: 18.09.2013
(51) Int. Cl.: G01D 5/245, G01D 5/20, G01B 7/00, G01B 7/30

(54) **Induktive Positionsmesseinrichtung**
Inductive position measurement device
Dispositif de mesure de position inductif

(30) Priorität: 13.12.2012 DE 102012223037
(43) Veröffentlichungstag der Anmeldung: 18.06.2014
(73) Patentinhaber: Dr. Johannes Heidenhain GmbH, 83301 Traunreut (DE)
(72) Erfinder: Tiemann, Marc Oliver, A-5020 Salzburg (AT); Heumann, Martin, 83278 Traunstein (DE)

(56) Entgegenhaltungen:
- EP-A2- 1 959 240
- DE-A1- 19 701 319
- JP-A- 2009 222 496
- US-A- 5 886 519

## Beschreibung

Die Erfindung betrifft eine induktive Positionsmesseinrichtung zur Bestimmung von Relativpositionen gemäß dem Anspruch 1.

Induktive Positionsmesseinrichtungen werden beispielsweise als Drehgeber zur Bestimmung der Winkellage zweier relativ zueinander drehbarer Maschinenteile verwendet. Bei induktiven Positionsmesseinrichtungen sind häufig Erregerspulen und Empfängerspulen etwa in Form von Leiterbahnen auf einer gemeinsamen Leiterplatte aufgebracht, die beispielsweise mit einem Stator eines Drehgebers fest verbunden ist. Dieser Leiterplatte gegenüber befindet sich ein Teilungselement, auf dem in periodischen Abständen alternierend elektrisch leitfähige und nichtleitfähige Flächen oder Stege und Lücken als Teilungsstruktur aufgebracht sind, und welches mit dem Rotor des Drehgebers drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet.

Ferner werden induktive Positionsmesseinrichtungen häufig auch zur direkten Messung von Längsverschiebungen entlang einer Achse verwendet. Dabei wird das gleiche Messprinzip angewendet wie bei den oben genannten Drehgebern, allerdings verlaufen dann die Empfängerspulen und die Teilungsstruktur entlang der geradlinigen Achse.

Häufig werden derartige induktive Positionsmesseinrichtungen als Messgeräte für elektrische Antriebe, zur Bestimmung der Relativbewegung bzw. der Relativlage von entsprechenden Maschinenteilen, eingesetzt. In diesem Fall werden die erzeugten Positionswerte einer Folgeelektronik zur Ansteuerung der Antriebe über eine entsprechende Schnittstellenanordnung zugeführt.

In der EP 1 750 101 B1 der Anmelderin wird eine Winkelmesseinrichtung beschrieben, bei der neben der Messung der Winkelstellung zusätzlich eine axiale Verschiebung in Abhängigkeit einer gemessenen Temperatur bestimmbar ist.

Aus Offenlegungsschrift JP 2009-222496 A ist eine Längenmesseinrichtung bekannt, die sich durch eine vereinfachte Montage auszeichnet. Zu diesem Zweck werden dort auf einer Leiterplatte Erregerleitungen senkrecht zur Messrichtung versetzt zu Empfängerschleifen angeordnet. Durch diese Maßnahme wird die Signalamplitude in einer Weise verändert, dass die zulässige Montagetoleranz senkrecht zur Messrichtung erhöht werden kann.

Der Erfindung liegt die Aufgabe zugrunde, eine induktive Positionsmesseinrichtung zu schaffen, durch die eine Bestimmung einer Verschiebung mit einer Richtung senkrecht zur eigentlichen Messrichtung auf einfache Weise ermöglicht ist.

Diese Aufgabe wird erfindungsgemäß durch die Merkmale des Anspruches 1 gelöst.

Die induktive Positionsmesseinrichtung weist demnach ein Abtastelement und ein Teilungselement auf, wobei das Abtastelement relativ zum Teilungselement in einer ersten Richtung rotatorisch bewegbar ist. Das Abtastelement umfasst Erregerleitungen zur Erzeugung elektro-magnetischer Felder und drei Empfängerspuren, die jeweils zumindest eine Empfängerleitung aufweisen. Die erste und die zweite Empfängerspur sind zueinander in einem Abstand, welcher sich orthogonal zur ersten Richtung erstreckt, angeordnet. Die dritte Empfängerspur ist zwischen der ersten und der zweiten Empfängerspur angeordnet. Ferner umfasst das Teilungselement zwei Teilungsspuren, die zueinander in einem Abstand, welcher sich orthogonal zur ersten Richtung erstreckt, angeordnet sind und entlang der ersten Richtung unterschiedliche Teilungsperioden aufweisen. Weiterhin ist die Positions-messeinrichtung so konfiguriert, dass von den Erregerleitungen erzeugte elektromagnetische Felder durch die Teilungsspuren modulierbar sind, so dass den Empfängerleitungen der ersten und der zweiten Empfängerspur eine Relativposition in der ersten Richtung detektierbar ist, während mit der zumindest einen Empfängerleitung der dritten Empfängerspur eine Relativposition in einer zweiten Richtung welche orthogonal zur ersten Richtung orientiert ist, detektierbar ist.

Eine Teilungsperiode ist eine geometrische Länge, die durch die Teilungsstruktur bestimmt ist. Innerhalb einer Teilungsperiode befinden sich beispielsweise jeweils genau eine leitende und eine nicht-leitenden Fläche bzw. genau ein Steg und eine Lücke. Beim Überstreichen einer Teilungsperiode wird durch das Abtastelement eine Signalperiode erzeugt.

Als Spuren, also insbesondere die Erregerspur, die erste, zweite und dritte Empfängerspur sowie die Teilungsspur, sind geometrische Bereiche zu verstehen, die sich entlang der ersten Richtung erstrecken und eine Ausdehnung in der zweiten Richtung aufweisen. Im Falle einer Winkelmesseinrichtung kann eine Spur als eine rechteckige Fläche aufgefasst werden, die sich entlang des Umfangs erstreckt und insbesondere in der ersten Richtung endlos sein kann. Bei Positionsmessgeräten zur Messung einer translatorischen Relativposition kann eine Spur eine rechteckige Geometrie aufweisen. Die erste, zweite und dritte Empfängerspur kann über die vollständige Messlänge bzw. den vollständigen Umfang oder nur abschnittsweise oder segmentweise Empfängerleiter aufweisen. Das Positionsmessgerät kann insbesondere derart ausgestaltet sein, dass die Empfängerleitung relativ gegenüber einer Empfängerleitung zumindest einer der anderen Empfängerspuren mit einem Versatz in der ersten Richtung angeordnet ist.

Üblicherweise sind das Abtastelement und das Teilungselement einander gegenüberliegend angeordnet und durch einen Luftspalt, der sich in einer dritten Richtung erstreckt, welche orthogonal zur ersten und zur zweiten Richtung orientiert ist, voneinander beabstandet. Die Erfindung bezieht sich nicht auf die Detektion der Breite des Luftspalts. Durch die unterschiedlichen Teilungsperioden kann mit Hilfe geeigneter Signalauswerteverfahren, beispielsweise nach dem Noniusprinzip, eine absolute Relativposition zwischen dem Abtastelement und dem Teilungselement bestimmbar sein.

Die induktive Positionsmesseinrichtung ist insbesondere so ausgestaltet, dass auf dem Abtastelement die erste Empfängerspur und die zweite Empfängerspur mit Empfängerleitern angeordnet sind. Das Teilungselement umfasst dabei die erste Teilungsspur und die zweite Teilungsspur, wobei die Positionsmesseinrichtung so konfiguriert ist, dass bei gleicher Relativbewegung zwischen dem Abtastelement und dem Teilungselement durch die Empfängerleiterbahnen der ersten Empfängerspur eine größere Anzahl von Signalperioden erzeugbar ist als durch die Empfängerleiterbahnen der zweiten Empfängerspur. Unter gleicher Relativbewegung sind Relativbewegungen gleicher Größe zu verstehen, beispielsweise eine Relativdrehung um ein bestimmtes Winkelmaß.

Mit Vorteil weist zumindest eine der Empfängerspuren zumindest zwei Empfängerleitungen auf.

In weiterer Ausgestaltung der Erfindung besteht zumindest eine der Teilungsspuren aus einer Teilungsstruktur, die entlang der ersten Richtung alternierend angeordnete, elektrisch leitfähige und nichtleitfähige Bereiche aufweist.

Die induktive Positionsmesseinrichtung kann auch so konfiguriert sein, dass zumindest eine der Teilungsspuren aus einer Teilungsstruktur besteht, die entlang der ersten Richtung alternierend angeordnete Stege und Lücken aufweist. Die Teilungsspuren können auch als plattierte Metallschichten ausgestaltet sein.

Durch die Positionsmesseinrichtung sind Winkelstellungen bestimmbar, wobei das Teilungselement eine gekrümmte Mantelfläche aufweist, auf der die Teilungsspuren in axialem Abstand angeordnet sind, also bezogen auf die Achse, um welche die Drehung erfolgen soll, axial versetzt sind. Mit Vorteil weist die erste oder die zweite Empfängerspur zumindest eine Empfängerleitung auf, die sich entlang der ersten Richtung über einen Winkel von mehr als 180°, insbesondere von mehr als 225°, vorteilhaft mit einem Winkel von mindestens 270° erstreckt. Die Winkelangaben beziehen sich auf einen Zentriwinkel mit einem Zentralpunkt auf derjenigen Achse, um welche die Drehung des Teilungselements relativ zum Abtastelement erfolgen soll.

Desgleichen kann sich die Empfängerleitung bzw. können sich die Empfängerleitungen der dritten Empfängerspur entlang der ersten Richtung über einen Winkel von mehr als 180°, insbesondere von mehr als 225°, mit Vorteil von mindestens 270° erstrecken.

Die Empfängerleitung der dritten Empfängerspur kann auch so ausgestaltet sein, dass diese Unterbrechungen entlang der ersten Richtung aufweist. Entsprechend können also die Teilungsspuren über den Umfang an mehreren Stellen abgetastet werden. Beispielsweise können Stellen, an denen die Teilungsspuren abgetastet werden, also an denen sich zumindest eine Empfängerleitung der dritten Empfängerspur befindet, bezüglich eines Zentralpunkts auf der Achse gegenüberliegend angeordnet sein. Bei einer derartigen Ausgestaltung können sich die Empfängerleitungen der dritten Empfängerspur jeweils über einen Zentriwinkel von mindestens 60°, mit Vorteil mindestens 75° oder vom mindestens 100°, mit einem Zentralpunkt auf der Achse erstrecken.

Durch die vergleichsweise große Länge der Empfängerleitungen weisen die erzeugten Signale ein hohes Maß an Unempfindlichkeit gegen Exzentrizitäts- und Taumelfehler auf. In der Folge können relativ große Fertigungs- und Montagetoleranzen zugelassen werden.

Alternativ kann das Abtastelement auch so ausgestaltet sein, dass die erste, zweite oder dritte Empfängerspur mehrere Segmente aufweist, so dass eine Empfängerspur und optional auch die Erregerleitungen quasi entlang der ersten Richtung unterbrochen sind. Dabei kann innerhalb der Segmente zumindest eine Empfängerleitung angeordnet sein, während außerhalb der Segmente entlang der ersten Richtung keine Empfängerleitung vorliegt.

Beispielsweise kann bei einer Positionsmesseinrichtung, durch die Winkelstellungen bestimmbar sein sollen, zumindest die dritte Empfängerspur über den Umfang segmentweise verteilte Empfängerleitungen aufweisen, wobei sich der Bereich einer Empfängerleitung über ein Winkelsegment von jeweils weniger als 30° (also ¹/₁₂ des Gesamtumfangs), insbesondere weniger als 15° (also ¹/₂₄ des Gesamtumfangs) erstrecken kann. Mit Vorteil sind bei einer derartigen Ausgestaltung einer Positionsmesseinrichtung, durch die Winkelstellungen bezogen auf eine (Dreh-) Achse bestimmbar sein sollen, die einzelnen Segmente punktsymmetrisch bezüglich eines Punktes auf der Achse angeordnet.

Gemäß einer weiteren Ausbildung der Erfindung kann zumindest eine der Erregerleitungen derart angeordnet sein, dass durch diese ein elektromagnetisches Feld erzeugbar ist, durch das nach dessen Modulation durch das Teilungselement sowohl
a) mit der Empfängerleitung der ersten und der zweiten Empfängerspur eine Relativposition in der ersten Richtung detektierbar ist, als auch
b) mit der Empfängerleitung der dritten Empfängerspur eine Relativposition in einer zweiten Richtung detektierbar ist.

Auf eine separate oder zusätzliche Erregerleitung für die Erzeugung von Signalen mit der Empfängerleitung der dritten Empfängerspur kann demnach verzichtet werden.

Mit Vorteil ist neben zwei der Empfängerspuren zumindest abschnittsweise bezüglich der zweiten Richtung, welche orthogonal zur ersten Richtung und nicht in Luftspaltrichtung orientiert ist, jeweils zu beiden Seiten eine Erregerleitung angeordnet. Insbesondere kann das Abtastelement so ausgestaltet sein, dass neben allen drei Empfängerspuren zumindest abschnittsweise bezüglich der zweiten Richtung jeweils zu beiden Seiten eine Erregerleitung angeordnet ist. In vorteilhafter Ausgestaltung der Erfindung sind zwischen der ersten und der zweiten Empfängerspur zumindest abschnittsweise zwei Erregerleitungen angeordnet. Insbesondere sind zu beiden Seiten einer Empfängerleitung Erregerleitungen angeordnet.

Vorteilhafterweise liegt das Verhältnis der Teilungsperiode der ersten Teilungsspur zur Teilungsperiode der zweiten Teilungsspur innerhalb eines Bereiches von ¼ bis 4. Insbesondere kann das Verhältnis minimal ⅓ und maximal 3 betragen, mit Vorteil liegt das Verhältnis innerhalb eines Bereiches von ½ bis 2. Beispielsweise kann im Fall einer Positionsmesseinrichtung, die dazu bestimmt ist Winkelstellungen zu messen, die Anzahl der Teilungsperioden der ersten Teilungsspur sich um den Wert eins gegenüber der Anzahl der Teilungsperioden der zweiten Teilungsspur unterscheiden.

Die zwei Teilungsspuren weisen unterschiedliche Teilungsperioden auf. Demnach liegen also eine Teilungsspur mit einer längeren Teilungsperiode und eine Teilungsspur mit einer kürzeren Teilungsperiode vor. Mit Vorteil erstreckt sich die dritte Empfängerspur entlang der ersten Richtung über eine Länge, die größer ist als die längere der Teilungsperioden.

Vorteilhafte Ausbildungen der Erfindung entnimmt man den abhängigen Ansprüchen.

Weitere Einzelheiten und Vorteile der erfindungsgemäßen induktiven Positionsmesseinrichtung ergeben sich aus der nachfolgenden Beschreibung zweier Ausführungsbeispiele anhand der beiliegenden Figuren.

Es zeigen die
- Figur 1: eine perspektivische Ansicht einer Positionsmesseinrichtung zur Bestimmung einer relativen Winkelposition,
- Figur 2: eine Draufsicht auf einen Teilbereich eines Abtastelements,
- Figur 3: eine Draufsicht auf eine Positionsmesseinrichtung zur Bestimmung einer relativen Winkelposition gemäß einem zweiten Ausführungsbeispiel,
- Figur 4: eine perspektivische Ansicht einer nicht-erfindungsgemäßen Positionsmesseinrichtung zur Bestimmung einer translatorischen Relativposition,
- Figuren 5a: eine Draufsicht auf einen Teilbereich eines Teilungselements einer nicht-erfindungsgemäßen Positionsmesseinrichtung zur Bestimmung einer translatorischen Relativposition,
- Figuren 5b: eine Draufsicht auf einen Teilbereich eines Abtastelements einer nicht-erfindungsgemäßen Positionsmesseinrichtung zur Bestimmung einer translatorischen Relativposition.

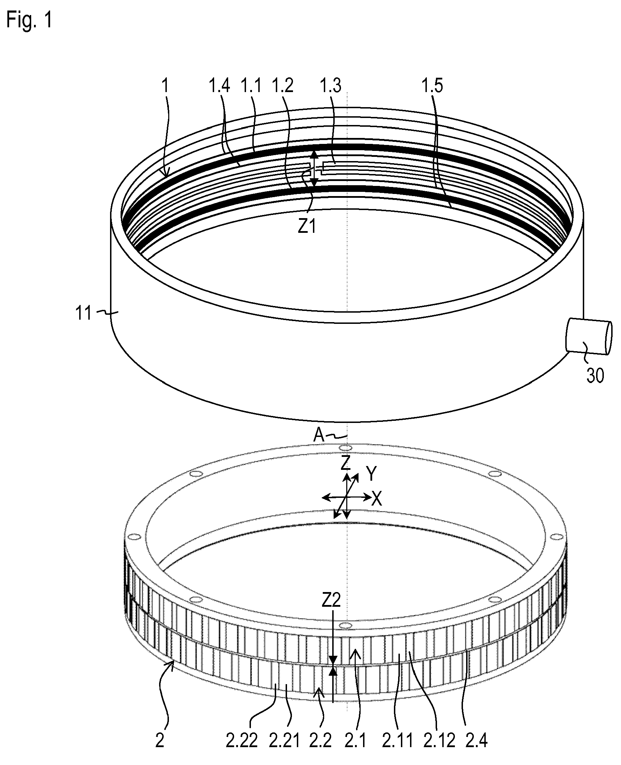

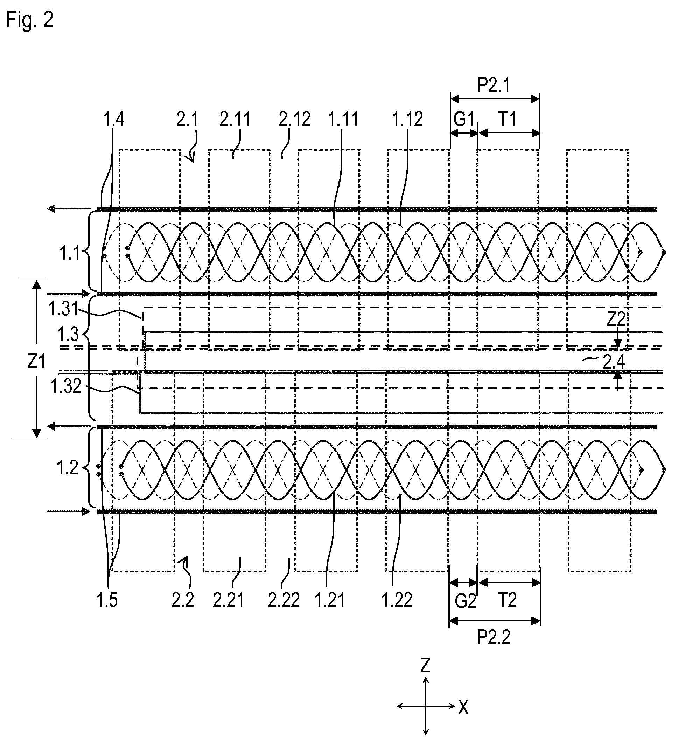

Im ersten Ausführungsbeispiel gemäß den Figuren 1 und 2 wird die Erfindung anhand einer Positionsmesseinrichtung beschrieben, welche zur Erfassung einer Winkelposition zwischen einem Abtastelement 1 und einem Teilungselement 2 bzw. einer Skala bestimmt ist. In der Figur 1 sind das Abtastelement 1 und das Teilungselement 2 zum Zwecke der Erläuterung der Bauweise separat dargestellt. Im betriebsgemäßen Zustand liegen das Abtastelement 1 und das Teilungselement 2 mit radialem Luftspalt konzentrisch einander gegenüber.

Das Teilungselement 2 ist in diesem Ausführungsbeispiel als ein Ring ausgestaltet, an dessen Mantelseite sich zwei im Abstand Z2 angeordnete Teilungsspuren 2.1, 2.2 befinden. Die Teilungsspuren 2.1, 2.2 umfassen im vorgestellten Beispiel Stege 2.11, 2.21 und dazwischen liegende Lücken 2.12, 2.22, wobei die erste Teilungsspur 2.1 vierundsechzig derartiger Stege 2.11 aufweist, während die zweite Teilungsspur 2.2 nur dreiundsechzig Stege 2.22 umfasst. Beispielsgemäß befindet sich eine umlaufende Rille 2.4 mit der axialen Ausdehnung Z2 zwischen den Stegen 2.11, 2.21.

Die beiden Teilungsspuren 2.1, 2.2 bestehen demnach jeweils aus einer periodischen Abfolge von alternierend angeordneten Stegen 2.11, 2.21 und Lücken 2.12, 2.22.

Die erste Teilungsperiode P2.1 der ersten Teilungsspur 2.1 ergibt sich aus der Summe der Länge T1 eines der Stege 2.11 und der Länge G1 einer der Lücken 2.12, wobei sich die Längen T1, G1 in Richtung X erstrecken. Gleichermaßen stellt die zweite Teilungsperiode P2.2 die Summe der Länge T2 eines der Stege 2.21 und der Länge G2 einer der Lücken 2.22 aus der zweiten Teilungsspuren 2.2 dar. Die beiden Teilungsspuren 2.1, 2.2 sind so dimensioniert, dass folgender Zusammenhang gilt: T1/G1 ≈ T2/G2.

Die Teilungsspuren 2.1, 2.2 weisen insbesondere entlang einer ersten Richtung X, hier in Umfangsrichtung, unterschiedliche Teilungsperioden P2.1, P2.2 (Fig. 2) auf, nämlich:
P2.1 = Umfang/64 und
P2.2 = Umfang/63.

Demgemäß wird das Verhältnis der Teilungsperiode P2.1 der ersten Teilungsspur 2.1 zur Teilungsperiode P2.2 der zweiten Teilungsspur 2.2 folgendermaßen gebildet:
P2.1:P2.2 = (Umfang/64):(Umfang/63) = 63/64 ≈ 0,984.

Das Abtastelement 1 besteht aus einer ringförmig angeordneten flexiblen Leiterplatte, auf welcher zwei Erregerleitungen 1.4, 1.5 und drei Empfängerspuren 1.1, 1.2, 1.3 angeordnet sind. Sowohl die Erregerleitungen 1.4, 1.5 als auch die Empfängerspuren 1.1, 1.2, 1.3 weisen eine Erstreckung entlang der Richtung X bzw. entlang der Umfangsrichtung auf und zwar nahezu über den gesamten Umfang des Abtastelements 1. Eine vollständige Erstreckung über den gesamten Umfang ist in der Praxis kaum oder nur mit erhöhtem Aufwand herstellbar, weil auf dem Abtastelement 1 Anschlussbereiche für die Erregerleitungen 1.4, 1.5 und Empfängerspuren 1.1, 1.2, 1.3 vorgesehen sind, was eine - wenn auch nur geringfügige - Diskontinuität zur Folge hat. Die erste und die zweite Empfängerspur 1.1, 1.2 sind zudem zueinander in einem Abstand Z1 auf dem Abtastelement 1 aufgebracht. Der Abstand Z1 erstreckt sich orthogonal zur ersten Richtung X also zur Umfangsrichtung und ist insbesondere parallel zum Abstand Z2 bzw. axial orientiert.

Weiterhin befindet sich auf dem Abtastelement 1 eine dritte Empfängerspur 1.3. Diese ist axial zwischen der ersten und der zweiten Empfängerspur 1.1, 1.2 angeordnet und erstreckt sich in Richtung X fast über den gesamten Umfang des Abtastelements 1 mit Ausnahme des Anschlussbereichs. Die Erregerleitungen 1.4, 1.5 und die Empfängerspuren 1.1, 1.2, 1.3 sind als Leiterbahnen der als mehrlagig aufgebauten flexiblen Leiterplatte, die als Abtastelement 1 dient, ausgestaltet.

Zudem ist auf dem Abtastelement 1 eine elektronische Schaltung sowie ein Steckerelement angeordnet, welche in den Figuren nicht dargestellt sind. Das Abtastelement 1 ist in einem ringförmigen Gehäuse 11 montiert. Über ein Kabel 30 ist das Abtastelement 1 mit einer Folgeelektronik verbindbar.

In der Figur 2 sind in einem Detailausschnitt die drei Empfängerspuren 1.1, 1.2, 1.3 und die beiden Erregerleitungen 1.4, 1.5 zusammen mit Teilungsspuren 2.1, 2.2 gezeigt. Die erste und die zweite der Empfängerspuren 1.1, 1.2 weisen jeweils ein Paar Empfängerleiterbahnen 1.11, 1.12; 1.21, 1.22, auf. Die dritte Empfängerspur 1.3 umfasst zwei Empfängerschleifen 1.31, 1.32, die ebenfalls als Leiterbahnen ausgestaltet sind.

Wie aus der Figur 2 ersichtlich, ist also sowohl neben der ersten als auch neben der zweiten Empfängerspur 1.1, 1.2 in Z-Richtung jeweils zu beiden Seiten eine Erregerleitung 1.4, 1.5 angeordnet. Mit anderen Worten ausgedrückt, liegen in einer Richtung (Z-Richtung), die orthogonal zur Richtung X orientiert ist, zwei Erregerleitung 1.4, 1.5 zwischen der ersten und der zweiten Empfängerspur 1.1, 1.2.

Im betriebsgemäßen Zustand liegt das Teilungselement 2 radial innerhalb des Abtastelements 1, ohne dass sich diese berühren. Üblicherweise dient das Teilungselement 2 als Rotor und wird an einem um eine Achse A drehbaren Maschinenteil befestigt. Dagegen bildet dann das Abtastelement 1 den Stator der Positionsmesseinrichtung, so dass dieses an einem stehenden Maschinenteil fixiert wird. Bei einer Relativdrehung zwischen Teilungselement 2 und Abtastelement 1 um die Achse A ist im Abtastelement 1 ein von der jeweiligen Winkelstellung abhängiges Signal durch Induktionseffekte erzeugbar.

Voraussetzung für die Bildung von entsprechenden Signalen ist, dass die Erregerleitungen 1.4, 1.5 ein zeitlich wechselndes elektromagnetisches Erregerfeld im Bereich der Empfängerspuren 1.1, 1.2, 1.3 bzw. im Bereich der damit abgetasteten Teilungsspuren 2.1, 2.2 erzeugen. Im dargestellten Ausführungsbeispiel sind die Erregerleitungen 1.4, 1.5 als mehrere parallele, Strom-durchflossene Einzel-Leiterbahnen ausgebildet. Werden die Erregerleitungen 1.4, 1.5 bestromt, so bildet sich um die jeweilige Erregerleitung 1.4, 1.5 ein schlauch- bzw. zylinderförmig orientiertes elektromagnetisches Feld aus. Die Feldlinien des resultierenden elektromagnetischen Feldes verlaufen in Form konzentrischer Kreise um die Erregerleitungen 1.4, 1.5, wobei die Richtung der Feldlinien in bekannter Art und Weise von der Stromrichtung in den Erregerleitungen 1.4, 1.5 abhängt. Im Bereich der Stege 2.11, 2.21 werden Wirbelströme induziert, so dass eine von der Winkelstellung abhängige Modulation des Feldes erreicht wird. Entsprechend kann durch die Empfängerspuren 1.1, 1.2 die Relativposition in Richtung X gemessen werden. Die Paare von Empfängerleiterbahnen 1.11, 1.12; 1.21, 1.22 einer Empfängerspur 1.1, 1.2 sind so angeordnet, dass diese jeweils um 90° phasenversetzte Signale liefern, so dass auch eine Bestimmung der Drehrichtung vorgenommen werden kann. Jede der Empfängerspuren 1.1, 1.2 zur Bestimmung der Position in Richtung X, also hier der Winkelstellung, wird von einer eigenen Erregerleitung 1.4, 1.5 umgeben.

Die erste, zweite und die dritte Empfängerspur 1.1, 1.2, 1.3 erstrecken sich nahezu um den gesamten Umfang des Abtastelements 1 also um fast 360° um die Achse A. Durch diese Bauweise kann auch bei vergleichsweise großen Anbautoleranzen eine genaue Winkelbestimmung erreicht werden.

Dadurch, dass die zwei Teilungsspuren 2.1, 2.2 geringfügig unterschiedliche Teilungsperioden P2.1, P2.2 aufweisen, kann aus den Signalen der Empfängerspuren 1.1, 1.2 unter Nutzung des Schwebungs- bzw. Noniusprinzips die absolute Winkelstellung des Teilungselements 2 in Bezug auf das Abtastelement 1 bestimmt werden.

Das Teilungselement 2 kann beispielsweise an einer Spindel einer Werkzeugmaschine befestigt sein, deren Drehstellung und Drehzahl primär gemessen werden soll. An einem Ende der drehbaren Welle ist ein Werkzeug montiert, dessen Position exakt bestimmt werden muss um eine genaue Bearbeitung eines entsprechenden Werkstückes zu gewährleisten. Wenn nun eine derartige Anordnung über längere Zeit betrieben wird, wird in der Regel in die Welle Wärme eingeleitet, beispielsweise aus dem Antriebsmotor oder aus den Lagern. Dies hat eine Längenänderung der Welle in Richtung Z zur Folge. Entsprechend ergibt sich eine Verschiebung der Position des Werkzeuges in Z-Richtung. Zur Steigerung der Präzision der Werkzeugmaschine wird nun der Wert bzw. die Größe der Längenänderung bestimmt und der numerischen Steuerung der Werkzeugmaschine bzw. der Folgeelektronik zur Positionskorrektur zugeführt. Mit der erfindungsgemäßen Positionsmesseinrichtung ist hierfür kein separates Positionsmessgerät zur Bestimmung der Längenänderung der Welle nötig.

Die relative Position in Richtung Z zwischen dem Teilungselement 2 und dem Abtastelement 1 wird mit der dritten Empfängerspur 1.3 detektiert. Die von den Empfängerschleifen 1.31, 1.32 erzeugten Signale hängen vom jeweiligen Überdeckungsgrad der jeweiligen Empfängerschleife 1.31, 1.32 mit der Rille 2.4 ab. Das zur Gewinnung der Signale für die Z-Position durch die dritte Empfängerspur 1.3 erforderliche Erregerfeld wird von den Erregerleitungen 1.4, 1.5 erzeugt. Somit kann durch die Positionsmesseinrichtung eine Relativposition in einer zweiten Richtung Z, welche orthogonal zur ersten Richtung X orientiert ist, detektiert werden unter Verwendung genau derjenigen Erregerleitungen 1.4, 1.5, welche elektromagnetische Felder erzeugen, mit deren Hilfe letztlich auch die eine Relativposition in der ersten Richtung X detektierbar ist mit Hilfe der ersten und der zweiten Empfängerspur 1.1; 1.2. Auf spezielle Erregerleitungen für die Detektion der Relativposition in Z-Richtung kann also verzichtet werden.

Die Richtung Z ist also eine Richtung, die orthogonal zur ersten Richtung X orientiert ist, jedoch nicht radial (nicht die Y-Richtung), so dass also für die Bestimmung der Längenänderung der Welle nicht die Breite des Luftspaltes zwischen dem Abtastelement 1 und dem Teilungselement 2 verwendet wird.

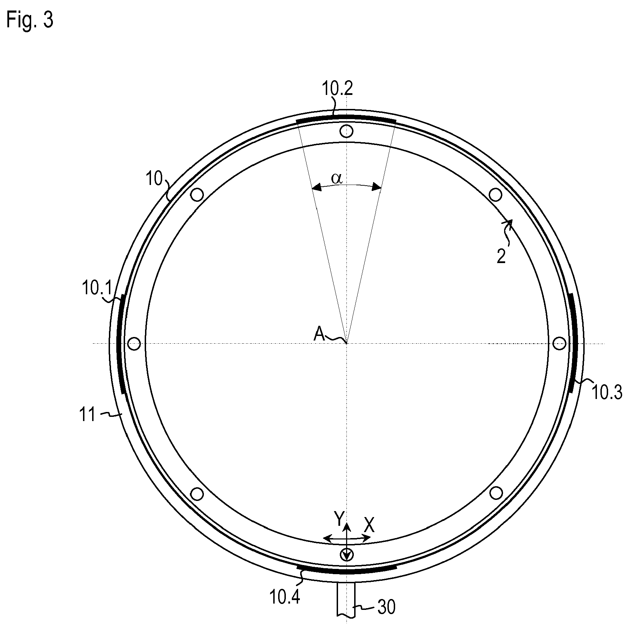

In der Figur 3 ist ein zweites Ausführungsbeispiel einer Positionsmesseinrichtung dargestellt, welche ebenfalls zur Erfassung einer Winkelposition bestimmt ist. Die Positionsmesseinrichtung gemäß diesem Ausführungsbeispiel umfasst ein äußeres ringförmiges Gehäuse 11 und ein Teilungselement 2. Diese sind entsprechend dem ersten Ausführungsbeispiel ausgestaltet. Dagegen weist die Positionsmesseinrichtung nach dem zweiten Ausführungsbeispiel ein Abtastelement 10 auf, welches vier Segmente 10.1, 10.2, 10.3, 10.4 umfasst. Jedes der Segmente 10.1, 10.2, 10.3, 10.4 weist, wie das Abtastelement 1 des ersten Ausführungsbeispiels Erregerleitungen 1.4, 1.5 und drei Empfängerspuren 1.1, 1.2, 1.3 auf, wobei die erste und die zweite Empfängerspur 1.1, 1.2 zueinander in einem Abstand Z1, welcher sich orthogonal zur ersten Richtung X also in Z-Richtung erstreckt, angeordnet sind. Die dritte Empfängerspur 1.3 ist zwischen der ersten und der zweiten Empfängerspur 1.1, 1.2 angeordnet. Somit kann die Figur 2 auch als ein Ausschnitt aus einem der Segmente 10.1, 10.2, 10.3, 10.4 des zweiten Ausführungsbeispiels betrachtet werden.

Jedes der Segmente 10.1, 10.2, 10.3, 10.4 erstreckt sich nur über einen Teilbereich des Umfangs des Teilungselements 2 bzw. des Innenumfangs des Gehäuses 11. Im gezeigten Ausführungsbeispiel erstreckt sich jedes der vier Segmente 10.1, 10.2, 10.3, 10.4 über einen Zentriwinkel α von 24°, so dass sich die Segmente 10.1, 10.2, 10.3, 10.4 in Summe nur über 26,7 % (96°) des Umfangs erstrecken.

Insbesondere bei größeren Durchmessern eines Teilungselements können sich die Segmente 10.1, 10.2, 10.3, 10.4 in Summe alternativ über wesentlich weniger als ¼ des Umgangs erstrecken. Alternativ können auch zwei, drei oder mehr als vier Segmente 10.1, 10.2, 10.3, 10.4 entlang des Umfangs angeordnet werden.

Die Segmente 10.1, 10.2, 10.3, 10.4 sind bezüglich eines Punktes auf der Achse A punktsymmetrisch zueinander angeordnet. Eine derartige Anordnung ist auch vorteilhaft, wenn eine andere Anzahl als vier Segmente 10.1, 10.2, 10.3, 10.4 verwendet wird.

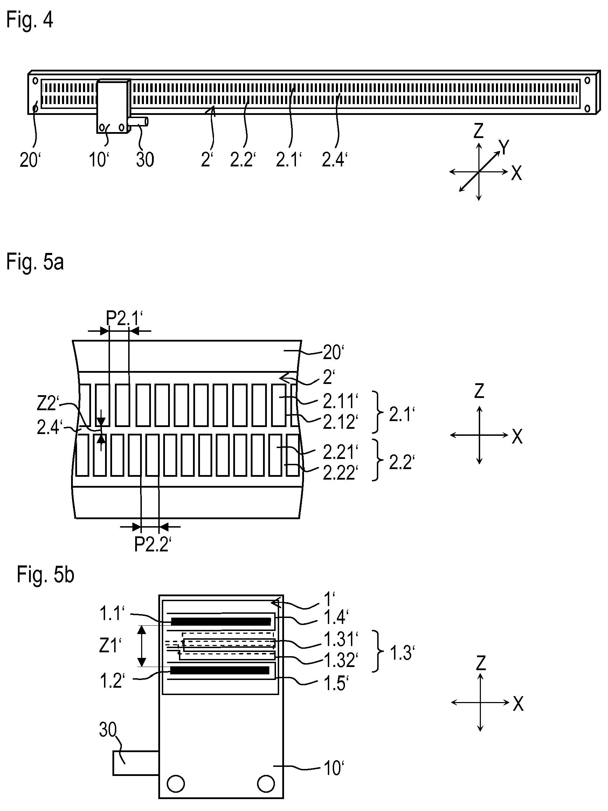

Mit einer Vorrichtung gemäß einem dritten Ausführungsbeispiel, die nicht zur Erfindung gehört und in den Figuren 4, 5a und 5b dargestellt ist, kann eine Messung einer translatorischen oder linearen Relativposition vorgenommen werden.

Das Teilungselement 2' ist in diesem Ausführungsbeispiel in einem Gehäuse 20' montiert und weist zwei Teilungsspuren 2.1', 2.2' auf. Die beiden Teilungsspuren 2.1', 2.2' bestehen jeweils aus einer periodischen Abfolge von alternierend angeordneten elektrisch leitfähigen Teilungsstrukturen 2.11', 2.21' und nichtleitfähigen Teilungsstrukturen 2.12', 2.22'. Als Material für die elektrisch leitfähigen Teilbereiche 2.11', 2.21' wurde im gezeigten Beispiel Kupfer auf ein Substrat aufgebracht. In den nichtleitfähigen Teilungsstrukturen 2.12', 2.22' wurde das Substrat dagegen nicht beschichtet. Die Teilungsspuren 2.1', 2.2' weisen entlang der ersten Richtung X unterschiedliche Teilungsperioden P2.1, P2.2 (Fig. 5a) auf.

Zwischen den Teilungsspuren 2.1', 2.2' befindet sich ein Streifen 2.4' mit einer Breite Z2', welcher keinerlei leitfähige Beschichtung aufweist.

Ferner weist die Positionsmesseinrichtung nach dem nicht erfindungsgemäßen dritten Ausführungsbeispiel ein Abtastelement 1' auf, welches aus einer Leiterplatte besteht, auf welcher zwei Erregerleitungen 1.4', 1.5' und drei Empfängerspuren 1.1', 1.2', 1.3' angeordnet sind. Die erste und die zweite Empfängerspur 1.1', 1.2' sind zueinander in einem Abstand Z1' auf dem Abtastelement 1' aufgebracht. Der Abstand Z1' erstreckt sich orthogonal zur ersten Richtung X und ist insbesondere parallel zum Abstand Z2' bzw. Z-Richtung orientiert.

Zugleich befindet sich auf dem Abtastelement 1' eine dritte Empfängerspur 1.3'. Diese ist in Z-Richtung zwischen der ersten und der zweiten Empfängerspur 1.1', 1.2' angeordnet. Die Erregerleitungen 1.4', 1.5' und die Empfängerspuren 1.1', 1.2', 1.3' sind als Leiterbahnen der als mehrlagig aufgebauten flexiblen Leiterplatte, die als Abtastelement 1' dient, ausgestaltet.

Zudem ist auf dem Abtastelement 1 eine nicht weiter dargestellte elektronische Schaltung sowie ein Steckerelement angeordnet. Das Abtastelement 1' ist in einem Gehäuse 10' montiert. Über ein Kabel 30 ist das Abtastelement 1' mit einer Folgeelektronik verbindbar.

Die erste und die zweite Empfängerspur 1.1', 1.2' sind prinzipiell analog zur Darstellung in der Figur 2 konfiguriert, also mit jeweils einem Paar von Empfängerleiterbahnen, die sinusartig versetzt angeordnet sind. Die beiden Erregerleitungen 1.4', 1.5' sind ebenfalls analog zur Darstellung in der Figur 2 ausgestaltet. Die dritte Empfängerspur 1.3' ist naturgemäß in X-Richtung kürzer ausgeführt als diejenige des ersten Ausführungsbeispiels.

Wenn nun das Abtastelement 1' entlang des Teilungselements 2' in X-Richtung bewegt wird, kann die absolute Relativposition zwischen diesen bestimmt werden, wobei auch hier von dem Noniusprinzip Gebrauch gemacht wird. Gleichzeitig kann die relative Position in Richtung Z zwischen dem Teilungselement 2' und dem Abtastelement 1' mit der dritten Empfängerspur 1.3' detektiert werden. Die von den einzelnen Empfängerschleifen 1.31', 1.32' erzeugten Signale hängen vom jeweiligen Überdeckungsgrad der jeweiligen Empfängerschleife 1.31', 1.32' mit dem unbeschichteten Streifen 2.4' ab.

Das Abtastelement 1' und das Teilungselement 2' sind also einander gegenüberliegend angeordnet und durch einen Luftspalt, der sich in Y-Richtung erstreckt, voneinander beabstandet. Die Erfindung bezieht sich auch hier nicht auf die Detektion der Breite des Luftspalts in Y-Richtung.

Unabhängig davon, ob die induktive Positionsmesseinrichtung als Winkelmesseinrichtung oder als eine nicht von der Erfindung umfasste Längenmesseinrichtung ausgestaltet ist, können als Teilungsstruktur Stege und Lücken oder elektrisch leitfähige Flächen und nicht-leitfähige Flächen verwendet werden.

## Patentansprüche

1. Induktive Positionsmesseinrichtung, die ein Abtastelement (1) und ein Teilungselement (2) aufweist, welche relativ zueinander in einer ersten Richtung (X) bewegbar sind, wobei
- das Abtastelement (1) Erregerleitungen (1.4, 1.5) und drei Empfängerspuren (1.1, 1.2, 1.3) umfasst, wobei jede der Empfängerspuren (1.1, 1.2, 1.3) zumindest zwei Empfängerleitungen (1.11, 1.12, 1.21; 1.22, 1.31, 1.32) aufweist, wobei die erste und die zweite Empfängerspur (1.1, 1.2) zueinander in einem Abstand (Z1), welcher sich orthogonal zur ersten Richtung (X) erstreckt, angeordnet sind und die dritte Empfängerspur (1.3) zwischen der ersten und der zweiten Empfängerspur (1.1, 1.2) angeordnet ist, wobei
- das Teilungselement (2) zwei Teilungsspuren (2.1, 2.2) umfasst, die zueinander in einem Abstand (Z2), welcher sich orthogonal zur ersten Richtung (X) erstreckt, angeordnet sind und entlang der ersten Richtung (X) unterschiedliche Teilungsperioden (P2.1, P2.2) aufweisen, wobei
weiterhin die Positionsmesseinrichtung so konfiguriert ist, dass durch die Teilungsspuren (2.1, 2.2) von den Erregerleitungen (1.4, 1.5) erzeugte elektromagnetische Felder modulierbar sind, so dass mit den Empfängerleitungen (1.11, 1.12, 1.21; 1.22) der ersten und der zweiten Empfängerspur (1.1, 1.2) eine Relativposition in der ersten Richtung (X) detektierbar ist, während mit den zumindest zwei Empfängerleitungen (1.31, 1.32) der dritten Empfängerspur (1.3) eine Relativposition in einer zweiten Richtung (Z), welche orthogonal zur ersten Richtung (X) orientiert ist, detektierbar ist, **dadurch gekennzeichnet, dass**
das Teilungselement (2) eine gekrümmte Mantelfläche aufweist, auf der die Teilungsspuren (2.1, 2.2) in axialem Abstand (Z2) angeordnet sind und sich die Empfängerleitungen (1.31, 1.32) der dritten Empfängerspur (1.3) entlang der ersten Richtung (X)
- über einen Winkel von mindestens von 180° erstrecken oder
- Unterbrechungen aufweisen und sich jeweils über einen Winkel von mindestens 60° erstrecken.

2. Induktive Positionsmesseinrichtung gemäß dem Anspruch 1, wobei zumindest eine der Teilungsspuren (2.1, 2.2) aus einer Teilungsstruktur (2.11, 2.12; 2.21, 2.22) besteht, die entlang der ersten Richtung (X) alternierend angeordnete, elektrisch leitfähige und nichtleitfähige Bereiche aufweist.

3. Induktive Positionsmesseinrichtung gemäß dem Anspruch 1 oder 2, wobei zumindest eine der Teilungsspuren (2.1, 2.2) aus einer Teilungsstruktur (2.11, 2.12; 2.21, 2.22) besteht, die entlang der ersten Richtung (X) alternierend angeordnete Stege und Lücken aufweist.

4. Induktive Positionsmesseinrichtung gemäß einem der vorhergehenden Ansprüche, wobei die erste oder die zweite Empfängerspur (1.1, 1.2) Empfängerleitungen (1.11, 1.12, 1.21; 1.22) aufweist, die sich entlang der ersten Richtung (X) über einen Winkel von mindestens von 270° erstrecken.

5. Induktive Positionsmesseinrichtung gemäß einem der vorhergehenden Ansprüche, wobei die dritte Empfängerspur (1.3) Empfängerleitungen (1.31, 1.32) aufweist, die sich entlang der ersten Richtung (X) über einen Winkel von mindestens von 270° erstrecken.

6. Induktive Positionsmesseinrichtung gemäß einem der vorhergehenden Ansprüche, wobei zumindest eine der Erregerleitungen (1.4, 1.52) derart angeordnet ist, dass durch diese ein elektromagnetisches Feld erzeugbar ist, durch das nach dessen Modulation
- mit den Empfängerleitungen (1.11, 1.12, 1.21; 1.22) der ersten und der zweiten Empfängerspur (1.1, 1.2) eine Relativposition in der ersten Richtung (X) detektierbar ist, und zudem
- mit den zumindest zwei Empfängerleitungen (1.31, 1.32) der dritten Empfängerspur (1.3) eine Relativposition in einer zweiten Richtung (Z) detektierbar ist.

7. Induktive Positionsmesseinrichtung gemäß einem der vorhergehenden Ansprüche, wobei neben zwei der Empfängerspuren (1.1, 1.2, 1.3) zumindest abschnittsweise bezüglich der zweiten Richtung (Z), welche orthogonal zur ersten Richtung (X) orientiert ist, jeweils zu beiden Seiten eine Erregerleitung (1.4, 1.5) angeordnet ist.

8. Induktive Positionsmesseinrichtung gemäß einem der vorhergehenden Ansprüche, wobei zwischen der ersten und der zweiten Empfängerspur (1.1, 1.2) zumindest abschnittsweise zwei Erregerleitungen (1.4, 1.5) angeordnet sind.

9. Induktive Positionsmesseinrichtung gemäß einem der vorhergehenden Ansprüche, wobei das Verhältnis der Teilungsperiode (P2.1) der ersten Teilungsspur (2.1) zur Teilungsperiode (P2.2) der zweiten Teilungsspur (2.2) innerhalb eines Bereiches von ¼ bis 4 liegt.

10. Induktive Positionsmesseinrichtung gemäß einem der vorhergehenden Ansprüche, wobei die dritte Empfängerspur (1.3) zumindest zwei Empfängerleitungen (1.11, 1.12, 1.21; 1.22, 1.31, 1.32) aufweist, die sich entlang der ersten Richtung (X) über eine Länge erstrecken, die größer ist als die längere der Teilungsperioden (P2.1, P2.2).

11. Induktive Positionsmesseinrichtung gemäß einem der vorhergehenden Ansprüche, wobei die erste, zweite oder dritte Empfängerspur 1.1, 1.2, 1.3) Segmente (10.1, 10.2, 10.3) aufweist, innerhalb welcher zumindest zwei Empfängerleitungen (1.11, 1.12, 1.21; 1.22, 1.31, 1.32) angeordnet sind, während außerhalb der Segmente (10.1, 10.2, 10.3) entlang der ersten Richtung (X) keine Empfängerleitung (1.11, 1.12, 1.21; 1.22, 1.31, 1.32) vorliegt.

12. Induktive Positionsmesseinrichtung dem Anspruch 11, wobei die Segmente (10.1, 10.2, 10.3) bezüglich eines Punktes auf der Achse (A) punktsymmetrisch angeordnet sind.

## Claims

1. Inductive position measurement device, comprising a scanning element (1) and a graduation element (2), which are movable relative to one another in a first direction (X), wherein
- the scanning element (1) comprises excitation lines (1.4, 1.5) and three receiver tracks (1.1, 1.2, 1.3), wherein each one of the receiver tracks (1.1, 1.2, 1.3) has at least two receiver lines (1.11, 1.12, 1.21; 1.22, 1.31, 1.32), wherein the first and the second receiver track (1.1, 1.2) are arranged at a distance (Z1), which extends orthogonal to the first direction (X), from one another and the third receiver track (1.3) is arranged between the first and the second receiver track (1.1, 1.2), wherein
- the graduation element (2) comprises two graduation tracks (2.1, 2.2), which are arranged at a distance (Z2), which extends orthogonal to the first direction (X), from one another and have different graduation periods (P2.1, P2.2) along the first direction (X), wherein,
furthermore, the position measurement device is configured in such a way that the graduation tracks (2.1, 2.2) render electromagnetic fields generated by the excitation lines (1.4, 1.5) modulatable such that a relative position in the first direction (X) is detectable by means of the receiver lines (1.11, 1.12, 1.21; 1.22) of the first and the second receiver track (1.1, 1.2), while a relative position in a second direction (Z), which is oriented orthogonal to the first direction (X), is detectable by means of the at least two receiver lines (1.31, 1.32) of the third receiver track (1.3), **characterized in that** the graduation element (2) has a curved lateral surface, on which the graduation tracks (2.1, 2.2) are arranged at an axial distance (Z2) from one another, and, along the first direction (X), the receiver lines (1.31, 1.32) of the third receiver track (1.3)
- extend over an angle of at least 180° or have interruptions and respectively extend over an angle of at least 60°.

2. Inductive position measurement device according to Claim 1, wherein at least one of the graduation tracks (2.1, 2.2) consists of a graduation structure (2.11, 2.12; 2.21, 2.22) which has alternately arranged electrically conductive and nonconductive regions along the first direction (X).

3. Inductive position measurement device according to Claim 1 or 2, wherein at least one of the graduation tracks (2.1, 2.2) consists of a graduation structure (2.11, 2.12; 2.21, 2.22) which has alternately arranged webs and gaps along the first direction (X).

4. Inductive position measurement device according to one of the preceding claims, wherein the first or the second receiver track (1.1, 1.2) has receiver lines (1.11, 1.12, 1.21; 1.22) which extend over an angle of at least 270° along the first direction (X).

5. Inductive position measurement device according to one of the preceding claims, wherein the third receiver track (1.3) has receiver lines (1.31, 1.32) which extend over an angle of at least 270° along the first direction (X).

6. Inductive position measurement device according to one of the preceding claims, wherein at least one of the excitation lines (1.4, 1.52) is arranged in such a way that an electromagnetic field is generable thereby, by means of which electromagnetic field, after the modulation thereof,
- a relative position in the first direction (X) is detectable by means of the receiver lines (1.11, 1.12, 1.21; 1.22) of the first and the second receiver track (1.1, 1.2), and moreover
- a relative position in a second direction (Z) is detectable by means of the at least two receiver lines (1.31, 1.32) of the third receiver track (1.3).

7. Inductive position measurement device according to one of the preceding claims, wherein, at least in portions, an excitation line (1.4, 1.5) is respectively arranged on both sides next to two of the receiver tracks (1.1, 1.2, 1.3) in respect of the second direction (Z) which is oriented orthogonal to the first direction (X).

8. Inductive position measurement device according to one of the preceding claims, wherein, at least in portions, two excitation lines (1.4, 1.5) are arranged between the first and the second receiver track (1.1, 1.2).

9. Inductive position measurement device according to one of the preceding claims, wherein the ratio of the graduation period (P2.1) of the first graduation track (2.1) to the graduation period (P2.2) of the second graduation track (2.2) lies within a range of ¼ to 4.

10. Inductive position measurement device according to one of the preceding claims, wherein the third receiver track (1.3) has at least two receiver lines (1.11, 1.12, 1.21; 1.22, 1.31, 1.32) which extend along the first direction (X) over a length that is greater than the longer one of the graduation periods (P2.1, P2.2).

11. Inductive position measurement device according to one of the preceding claims, wherein the first, second or third receiver track (1.1, 1.2, 1.3) has segments (10.1, 10.2, 10.3), within which at least two receiver lines (1.11, 1.12, 1.21; 1.22, 1.31, 1.32) are arranged, while no receiver lines (1.11, 1.12, 1.21; 1.22, 1.31, 1.32) are present outside of the segments (10.1, 10.2, 10.3) along the first direction (X).

12. Inductive position measurement device according to Claim 11, wherein the segments (10.1, 10.2, 10.3) are arranged in a point symmetrical manner in relation to one point on the axis (A).

## Revendications

1. Dispositif de mesure de position inductif, lequel possède un élément de palpage (1) et un élément à graduation (2), lesquels peuvent se déplacer l'un par rapport à l'autre dans une première direction (X),
- l'élément de palpage (1) comprenant des lignes d'excitateur (1.4, 1.5) et trois pistes de récepteur (1.1, 1.2, 1.3), chacune des pistes de récepteur (1.1, 1.2, 1.3) possédant au moins trois lignes de récepteur (1.11, 1.12, 1.21 ; 1.22, 1.31, 1.32), la première et la deuxième piste de récepteur (1.1, 1.2) étant disposées l'une par rapport à l'autre à un écart (Z1) qui s'étend orthogonalement par rapport à la première direction (X) et la troisième piste de récepteur (1.3) étant disposée entre la première et la deuxième piste de récepteur (1.1, 1.2),
- l'élément à graduation (2) comprenant deux pistes à graduation (2.1, 2.2) qui sont disposées l'une par rapport à l'autre à un écart (Z2) qui s'étend orthogonalement par rapport à la première direction (X) et possèdent le long de la première direction (X) des périodes de graduation (P2.1, P2.2) différentes,
le dispositif de mesure de position étant en outre configuré de telle sorte que les champs électromagnétiques générés au travers des pistes à graduation (2.1, 2.2) par les lignes d'excitateur (1.4, 1.5) sont modulables, de sorte qu'une position relative dans la première direction (X) peut être détectée avec les lignes de récepteur (1.11, 1.12, 1.21 ; 1.22) de la première et de la deuxième piste de récepteur (1.1, 1.2), alors qu'une position relative dans une deuxième direction (Z), laquelle est orientée orthogonalement à la première direction (X), peut être détectée avec les au moins deux lignes de récepteur (1.31, 1.32) de la troisième piste de récepteur (1.3), **caractérisé en ce que**
l'élément à graduation (2) possède une surface d'enveloppe curviligne sur lesquelles les pistes à graduation (2.1, 2.2) sont disposées à un écart axial (Z2) et les lignes de récepteur (1.31, 1.32) de la troisième piste de récepteur (1.3) s'étendent le long de la première direction (X)
- sur un angle d'au moins 180° ou
- possèdent des interruptions qui s'étendent respectivement sur un angle d'au moins 60°.

2. Dispositif de mesure de position inductif selon la revendication 1, avec lequel au moins l'une des pistes à graduation (2.1, 2.2) se compose d'une structure de graduation (2.11, 2.12 ; 2.21, 2.22) qui possède, le long de la première direction (X), des zones électriquement conductrices et non conductrices disposées en alternance.

3. Dispositif de mesure de position inductif selon la revendication 1 ou 2, avec lequel au moins l'une des pistes à graduation (2.1, 2.2) se compose d'une structure de graduation (2.11, 2.12 ; 2.21, 2.22) qui possède, le long de la première direction (X), des traverses et des interstices disposés en alternance.

4. Dispositif de mesure de position inductif selon l'une des revendications précédentes, avec lequel la première ou la deuxième piste de récepteur (1.1, 1.2) possède des lignes de récepteur (1.11, 1.12, 1.21 ; 1.22) qui s'étendent le long de la première direction (X) sur un angle d'au moins 270°.

5. Dispositif de mesure de position inductif selon l'une des revendications précédentes, avec lequel la troisième piste de récepteur (1.3) possède des lignes de récepteur (1.31, 1.32) qui s'étendent le long de la première direction (X) sur un angle d'au moins 270°.

6. Dispositif de mesure de position inductif selon l'une des revendications précédentes, avec lequel au moins l'une des lignes d'excitateur (1.4, 1.52) est disposée de telle sorte qu'il est possible, par le biais de celle-ci, de générer un champ électromagnétique qui, après sa modulation,
- permet de détecter, avec les lignes de récepteur (1.11, 1.12, 1.21 ; 1.22) de la première et de la deuxième piste de récepteur (1.1, 1.2), une position relative dans la première direction (X) et, en plus
- permet de détecter, avec les au moins deux lignes de récepteur (1.31, 1.32) de la troisième piste de récepteur (1.3), une position relative dans la deuxième direction (Z).

7. Dispositif de mesure de position inductif selon l'une des revendications précédentes, avec lequel une ligne d'excitateur (1.4, 1.5) est disposée au moins dans certaines sections respectivement des deux côtés à côté de deux des pistes de récepteur (1.1, 1.2, 1.3), en référence à la deuxième direction (Z) qui est orientée orthogonalement à la première direction (X).

8. Dispositif de mesure de position inductif selon l'une des revendications précédentes, avec lequel deux lignes d'excitateur (1.4, 1.5) sont disposées au moins dans certaines sections entre la première et la deuxième piste de récepteur (1.1, 1.2).

9. Dispositif de mesure de position inductif selon l'une des revendications précédentes, avec lequel le rapport entre la période de graduation (P2.1) de la première piste à graduation (2.1) et la période de graduation (P2.2) de la deuxième piste à graduation (2.2) se trouve à l'intérieur d'une plage de ¼ à 4.

10. Dispositif de mesure de position inductif selon l'une des revendications précédentes, avec lequel la troisième piste de récepteur (1.3) possède au moins deux lignes de récepteur (1.11, 1.12, 1.21 ; 1.22, 1.31, 1.32) qui s'étendent le long de la première direction (X) sur une longueur qui est supérieure à la plus longue des périodes de graduation (P2.1, P2.2).

11. Dispositif de mesure de position inductif selon l'une des revendications précédentes, avec lequel la première, la deuxième ou la troisième piste de récepteur (1.1, 1.2, 1.3) possède des segments (10.1, 10.2, 10.3) à l'intérieur desquels sont disposées au moins deux lignes de récepteur (1.11, 1.12, 1.21 ; 1.22, 1.31, 1.32), alors qu'aucune ligne de récepteur (1.11, 1.12, 1.21 ; 1.22, 1.31, 1.32) n'est présente à l'extérieur des segments (10.1, 10.2, 10.3) le long de la première direction (X).

12. Dispositif de mesure de position inductif selon la revendication 11, avec lequel les segments (10.1, 10.2, 10.3) sont disposés en symétrie ponctuelle en référence à un point sur l'axe (A).
